# EUROPEAN PATENT SPECIFICATION

(11) **EP 0 535 289 B1**
(45) Date of publication and mention of the grant of the patent: **31.01.1996**
(21) Application number: 91830411.4
(22) Date of filing: 03.10.1991
(51) Int. Cl.: G05F 1/445, H02M 5/293, H05B 39/04

(54) **Method and a device for continuously controlling the power being supplied to an electric load using a controllable static switch**
Verfahren und Vorrichtung zur ständigen Steuerung der Stromversorgung einer elektrischen Last mittels eines kontrollierbaren statischen Schalters
Procédure et appareil pour commander en continu l'alimentation d'énergie au charge électrique utilisant un commutateur statique contrôlable

(43) Date of publication of application: 07.04.1993
(73) Proprietor: BTICINO S.P.A., I-20122 Milano (IT)
(72) Inventor: Novati, Daniele, I-21100 Varese (IT)
(74) Representative: Maggioni, Claudio

(56) References cited:
- EP-A- 0 380 833
- GB-A- 2 127 635
- GB-A- 2 146 499
- GB-A- 2 213 659

## Description

This invention relates to power supply devices for an electric load which use an AC source, and in particular to a method and a device for continuously controlling the power being supplied to an electric load by means of a controllable conduction static switch.

As is known, for example from document EP-A-0 380 833, devices of this kind are widely employed in electric apparatus for continuously controlling the brightness of standard or quartz-iodine incandescent lamps, as well as for controlling electric fans and the like.

Such apparatus usually employ semiconductor devices called "triacs" and "thyristors" which, when connected between the power source and the electric load, operate as static switches whose conductive state can be controlled by means of a specially provided control circuit. The latter operates to close the supply circuit to the electric load at each half-wave of the AC supply in conformity with a predetermined angle. With lamps, adjustment of this angle allows modulation of the power being supplied to the load substantially between 0% and 100%. Such prior devices have several drawbacks, of which the most serious are:
the need to filter out RF noise from high current peaks on turning on the triac or thyristor; a filter coil is usually employed for the purpose which is comparatively expensive and bulky, and generates an objectionable hum due to electrodynamic phenomena;
the need to associate some suitable means of protection against overcurrents with the control device, because the current flowing through the static switch, once the latter is conducting, cannot be controlled, and destructive damage to the device in the event of a short across the controlled electric load or a fire hazard due to the high temperatures which are reached under such a condition would not be an unlikely occurrence; also in this case, the protective arrangements are comparatively expensive and bulky; and
where the device is used as a dimmer control for low-voltage quartz-iodine lamps requiring the provision of a transformer, the need to make arrangements for avoiding problems brought about by the transients which are generated in the transformer during the turn-on or adjustment operations and reflect in overcurrents or overtemperatures likely to damage both the static switch and the transformer.

To prevent such occurrences, it has been proposed that semiconductor devices, such as MOS power transistors or IGBT (Insulated Gate Bipolar Transistor) devices be used as static switches which, unlike triacs and thyristors that can only be turned on through their control terminal, also allow of controlled turn-off. For example, known has been a dimmer control device which makes use of a MOS power transistor connected between the positive node and the negative node of a bridge rectifier. This transistor is controlled through a specially provided circuit which can control the transistor to conduct upon the AC voltage supply crossing the zero line, hold it conductive through a predetermined settable portion of the voltage half-wave, and cut it off ahead of the next zero crossing.

The last-described approach also has, however, some drawbacks. In the instance of an inductive load, objectionable overvoltages are created in the device upon the static switch being turned off, thereby the maximum power supplied to the load must be limited significantly, or relatively expensive and bulky protection arrangements provided; in addition, the turn-on synchronization is not always well defined because of the voltage zero not being accurately detectable due to the relatively low drop of potential across the static switch (1 to 2 with a MOS power transistor in the conducting state), or to phase shifts in the instance of inductive loads.

It is an object of this invention to provide a method of controlling the power supply to a load by means of a static switch controllable to the on and off states, which can allow of maximum power supply without problems, even with inductive loads.

Another object of this invention is to provide a device for implementing the above method, which has a control circuit performing in an accurate and reliable way with any types of applications, and is low in cost and space requirements.

These objects are achieved, according to the invention, with the method and the device as defined and characterized in the appended claims to this specification.

The invention will be more readily understood from the following detailed description of two exemplary, and therefore non-limitative, embodiments thereof, to be read in conjunction with the accompanying drawings, where:
Figure 1 shows a block diagram of a device according to a first embodiment of the invention being connected to an AC power supply and a load;
Figure 2 shows in some detail, but still in diagram form, a portion of the device in Figure 1;
Figure 3 shows a series of waveforms as picked up at various points on the device of Figure 1 during its operation;
Figure 4 shows diagramatically a power supply circuit useful in the device of Figure 1;
Figure 5 shows, in block diagram form, a second embodiment of the device according to the invention, being connected to an AC voltage source and a load;
Figure 6 shows in some detail, and again in diagram form, a portion of the device in Figure 1, but according to an alternative embodiment to that shown in Figure 2; and
Figure 7 is a block diagram of the operating logic of a control circuit useful with both the device shown in Figure 1 and the one in Figure 5.

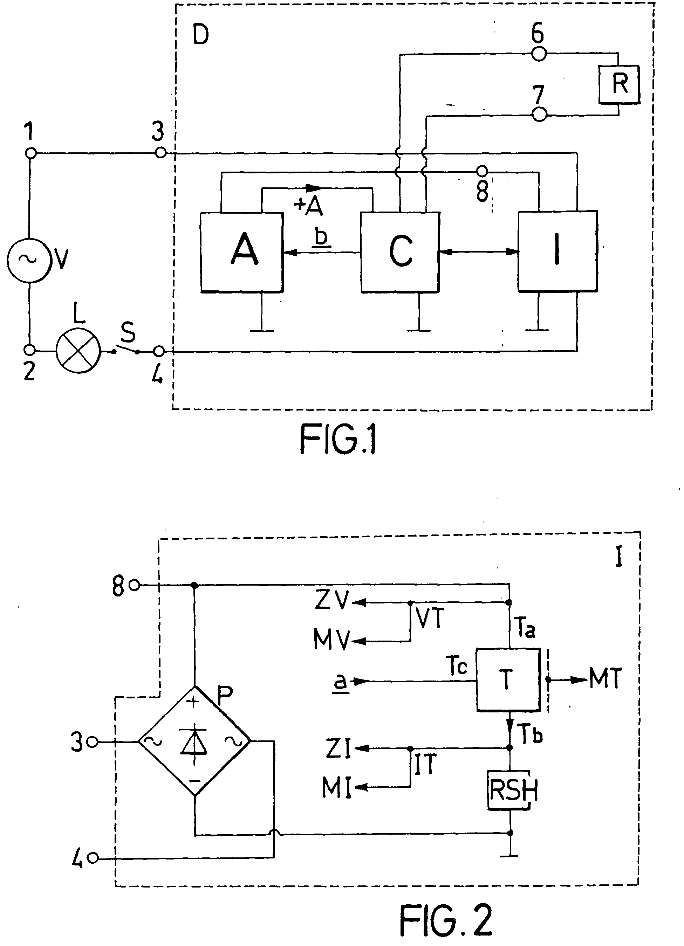

With reference to the drawings, shown at L in Figure 1 is an electric load, which may be an incandescent lamp and is connected to an AC source V, such as the house mains, through a device D for controlling the power supplied to the load, and hence, the lamp brightness. The last-mentioned device comprises a two-way static switch I, a control circuit C having a manual adjusting device R, and a DC power supply A, interconnected as shown in the Figure. The numerals appearing beside a small circle denote terminals of the circuit assembly. It should be noted that the link between the control circuit C and the static switch I consists of a number of conductors which conduct signals in either directions, as indicated by a double arrowhead. The circuit as shown in Figure 1, can be broken or made by means of a switch S in series with the load L. It may be appreciated, however, that it could be more convenient to have the load L connected directly to the terminal 4 of device D, and to have a switch connected to the control circuit C so as to activate or de-activate its control function on the static switch I.

Shown diagramatically in Figure 2 is the configuration of a possible two-way static switch I which uses a one-way component T. The latter functions as a switching element, and may either be a MOSFET power transistor or an IGBT (Insulated Gate Bipolar Transistor) component having two power terminals Ta and Tb, respectively the source arid drain terminals, and a control terminal Tc, the gate terminal. A diode bridge rectifier P is connected with its plus and minus terminals, respectively to the terminals Ta and Tb of transistor T through an intervening current sensor RSH, such as a resistor, in series with the terminal Tb. Denoted in Figure 2 by their symbols are binary logic signals, developed from transistor T and applied for processing to the control circuit C, and a two-level signal having a controlled leading edge, indicated at a, which is supplied by the control circuit C to the control terminal Tc of transistor T to drive it on and off. Specifically, ZV and MV are logic signals being developed from the voltage VT across the terminals Ta and Tb of transistor T and indicating that the voltage is either nul or equal to a predetermined maximum value, respectively; ZI and MI are logic signals developed from the current IT flowing through transistor T, as detected by measuring the voltage drop across the resistor RSH, and indicating that the current is either zero or equal to a predetermined maximum value, respectively; and MT is a logic signal indicating whether the temperature of transistor T has reached a predetermined maximum value.

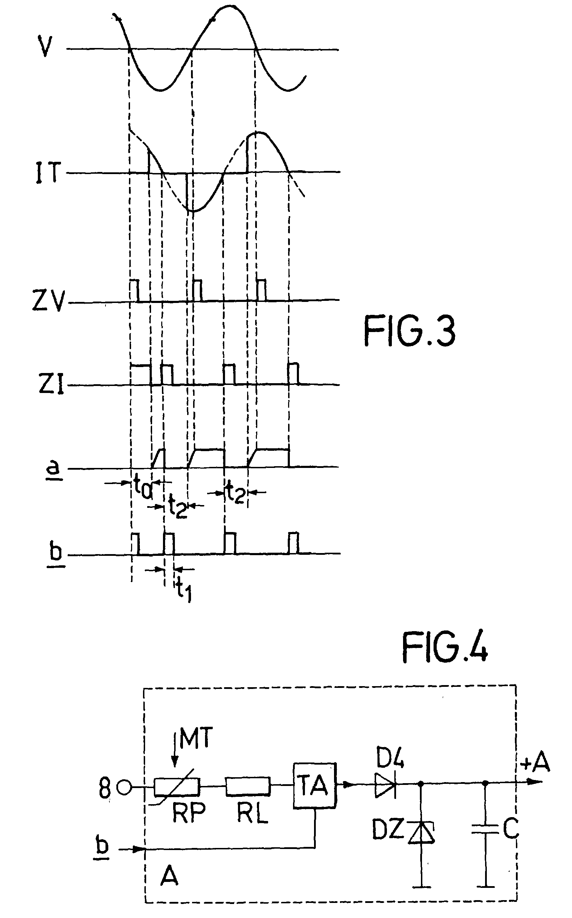

In accordance with the inventive method, and as shown in Figure 3, the control circuit C can drive the static switch I according to the following logics. Upon an AC voltage being applied to the static switch, where switch S has been provided, or upon the transistor T receiving a switch command from the control circuit C, where the load L is linked permanently to the device D, the control circuit will detect the first zero crossing of the voltage, as indicated by a high of the signal ZV and a high of the signal ZI, and after a pre-set time t0, apply a high signal a to the control terminal Tc of transistor T, thereby turning it on and holding it in the conduction state up to the zero crossing of current IT. From now on the static switch make and break cycle timing is taken up by the signal ZI, being accordingly the synchronization signal. After a preset time t2 from the low-to-high transition of the synchro signal ZI, the transistor T is again driven to conduct and held in this state up to the next zero crossing of the current, and so forth at each following half-wave.

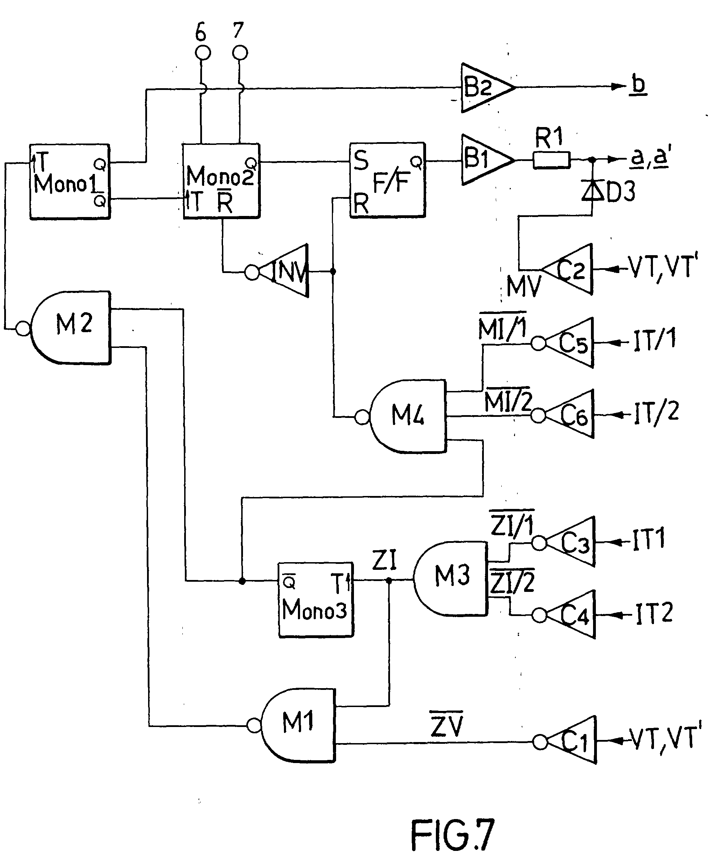

Note that to avoid make overvoltages and other transients likely to generate high-frequency noise, the static switch I is turned on gradually, as described hereinafter with reference to Figure 7.

The aforementioned preset time t2, i.e. the lag time in turning on the static switch I, and hence the power being supplied to the load, would be adjusted manually through a control circuit potentiometer, indicated at R in Figure 1, in a manner to be described with reference to Figure 7.

According to an advantageous feature of the invention, the control circuit is able to respond to an overcurrent signal MT or an excess temperature signal MI by turning off the static switch I, and to respond to an overvoltage signal MV by setting the switch to conduct. Thus, any potentially dangerous situation is avoided which could result in the device and the load becoming damaged.

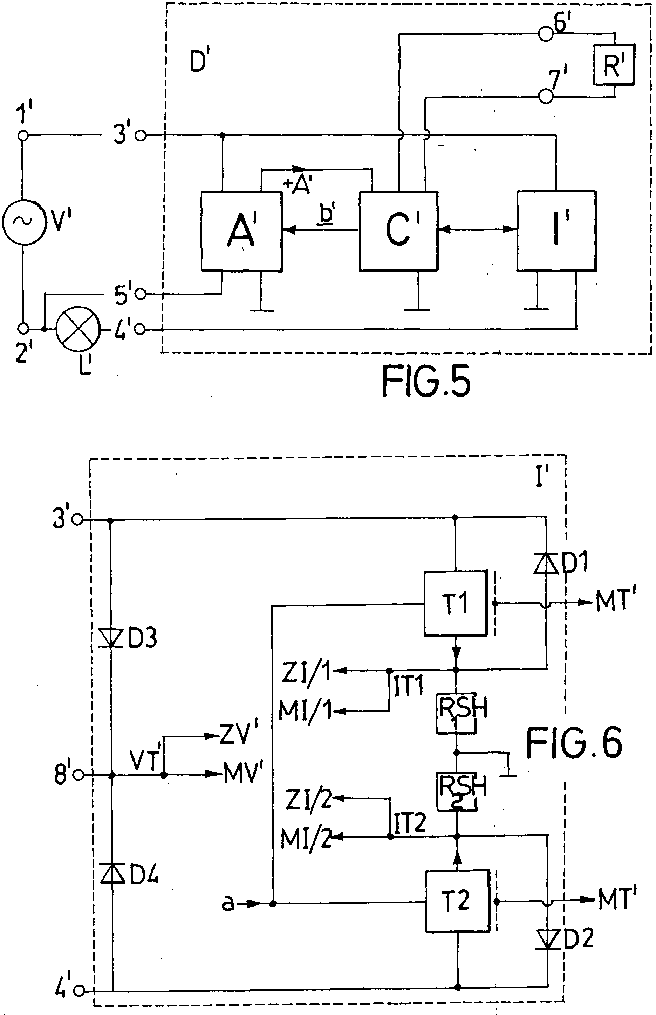

The power supply A to the control circuit C may be constructed conveniently as shown in Figure 4. It comprises a switch transistor TA which is connected, with one end, to the plus pole of the rectifier P (terminal 8) serially with a resistor RP whose value is determined by the maximum temperature of transistor T, i.e. by signal MT, and to a limiter resistor RL, and with the other end, to the supply terminal +A of control circuit C serially with a diode D4. A Zener diode DZ and a capacitor C, being both cascade connected to the power supply output, are respectively provided for limiting and equalizing the output voltage. The control terminal of transistor TA is connected to the output of the control circuit C whereon a signal b is formed.

The logics underlying the control circuit C is such that the signal b is high, and therefore able to drive the transistor TA into conduction, at the voltage zero (ZV high) when the load L is not being powered, or at the current zero (ZI from low to high) with the load L under power, and to hold it in conduction through a time tl which is shorter than a preset time and the minimum non-conduction time for the transistor T of the static switch. In view of the low current requirement of the control circuit C, usually just a few mA, this preset time is negligible compared with the cycle of the supply voltage V, thereby the maximum power which can be supplied to the load L is not significantly reduced. The resistor RP would be in actual practice a positive temperature coefficient resistor thermally coupled to the radiator on which the transistor T of the static switch I is mounted, and sized such that, upon the radiator temperature reaching a critical level due to excess current through the static switch I, it will attain a suitable value to cut off the supply to the control circuit, resulting in the static switch I being turned off. Such a configuration for the supply circuit A is a convenient one because it can be made to have minimum space requirements and virtually no power dissipation.

Another embodiment of the invention and a variation of the circuit shown in Figure 2 are illustrated by Figures 5 and 6, respectively, wherein similar or equivalent components of those in Figures 1 and 2 are denoted by the same references with a prime added. The embodiment of Figure 5 concerns a device for continuously controlling the brightness of a lamp L' of the so-called three-wire type, which differs from the two-wire type lust described by that the power supply A' to the control circuit C' receives power directly from the AC source V', thereby the device D' should have three terminals, indicated at 3', 4' and 5' in Fire 5, instead of two (3 and 4) as in the example of Figure 1.

In the variation of Figure 6, useful with the circuit of Fire 1 but, through simple modifications, with the circuit of Figure 5 as well, the two-way static switch comprises two transistors T1 and T2 which are push-pull connected across the terminals 3' and 4' for connection to the AC source V serially with the load L. Each of them has a diode D1 and D2, respectively, connected in parallel thereto with opposite forward conduction direction from that of its respective transistor. Advantageously, T1 and T2 may be two MOSFET power transistors having the diodes, D1 and D2, integrated to their same structure. Serially with the two transistors T1 and T2 are two resistors RSH1 and RSH2 which function to detect currents IT1 and IT2 flowing through the transistors, and hence, to obtain the zero current signals ZI/1 and ZI/2 and maximum current signals MI/1 and MI/2. Also connected across the terminals 3' and 4' are two back-to-back diodes D3 and D4, from the junction point whereof the operating voltage VT' for the static switch I is derived which provides the zero voltage ZV' and maximum voltage MV' signals. Specially arranged temperature sensors supply maximum temperature signals MT' also in this case.

One possible practical layout of the control circuits C, C' is illustrated by the logic diagram in Figure 7. The blocks designated C1, C6 therein depict comparators, all having an inverting output but for C2, which are input analog voltage or current signals from the static switch I, I', compare them with a respectively voltage or current internal reference, not shown, and output logic signals as defined hereinabove, at a high or a low according to the outcome of the comparison. The blocks M1-M4 depict logic multipliers or AND gates. The gates M1, M2 and M4 have an inverting output, and accordingly, perform NAND gate functions. The blocks Monol, Mono2 and Mono3 depict monostable circuits, block F/F depicts a bistable circuit, block INV depicts an inverter, and blocks B1 and B2 depict two interfacing or buffer circuits.

In operation, the signal ZV which appears at the output of the comparator C1 when the voltage VT, VT' is substantially zero activates the control input of the monostable Monol on condition that the output from the gate M3 indicates the absence of a zero current signal from the static switch I, I' (first voltage half-wave). Note that, in the instance of the static switch I having the configuration shown in Figure 2, the inputs of C3 and C4 would be shorted. Any transition from a low to a high of the synchronization signal ZI will activate the monostable Mono1, irrespective of the synchronization level ZV (half-waves following the first), and concurrently therewith, clear the input signal a to the static switch I, I' by acting, through the NAND gate M4, directly on the reset input of the bistable F/F, and by means of the inverter INV, on the reset input of the monostable Mono2. The signal ZI would not act directly, but rather through the monostable Mono3, which has a shorter pulse time than the pulse time of the monostable Mono 1, thereby allowing of the activation of monostable Mono2 by monostable Monol which could not take place otherwise because no current is yet flowing through the static switch. The output from the monostable Monol activates, through the buffer B2 and for a fixed time t1, the auxiliary static switch TA of the supply circuit A (logic signal b).

On expiration of this time t1, the complemented output from the monostable Mono1 activates the monostable Mono2 which, through the bistable F/F, the buffer B1, and the resistor R1, will function to control the turn-on time of the static switch. The leading edge of the signal a, and hence the change of the current through the static switch over time, is determined by the value of resistor R1 and the gate capacity of the driven transistor.

The pulse time t2 of monostable Mono2, which can be varied through the manual adjuster R (Figures 1 and 5), causes the conduction angle of the static switch to vary within each half-cycle of the supply voltage V, and consequently, the power being passed to the controlled load L to also vary.

The overcurrent signals MI/1-MI/2 which comprise, in the instance of the static switch I according to the diagram of Figure 2, a single signal because of the inputs of the comparators C5 and C6 being in this case shorted cause, through the NAND gate M4, the static switch to be turned off at once by acting on the reset input of monostable Mono2 and bistable F/F. On the other hand, the overvoltage signal MV acts, through a diode D3, directly on the static switch input driving it to conduct.

It may be appreciated from the foregoing description that this device can control in a continuous manner the power supply to a load with great accuracy, by virtue of the synchro signals being defined by events which can be identified at all times with great precision, even on the occurrence of phase shifts between the voltage and the current due, for example, to an inductive load. In fact, such events are the voltage zero crossing before the static switch begins to conduct and the current zero crossing while the switch is conducting. In addition, it requires no special filters or additional components for its protection and that of the load, since the conductive state of the static switch can be controlled accurately by the control circuit, in all circumstances under conditions of utmost safety and reliability.

While only two embodiments of this invention have been described and illustrated, it should be understood that several changes and modifications may be made thereto without departing from the scope of this inventive concept. As an example, the power supply to the control circuit could be the usual type, i.e. other than the one described, and the control circuit could be a different construction from that shown, using a microcontroller or an integrated circuit of the "custom" type which can serve all the functions of the control circuit, or at least some of them, along with the detection of the static switch operating parameters; with a microcontroller, this could also serve, additionally to the logic functions described hereinabove, other auxiliary or complementary functions such as providing an indication of the operative state, control of the instant power supply at peak voltage, or control of the power supply in a gradual manner.

## Claims

1. A method for continuously controlling the power being supplied to an electric load (L,L') from an AC voltage source (V,V') by means of a power static switch (I,I') comprising at least one controllable one-way switching element (T,T1,T2) provided with two power terminals (Ta,Tb) and a control circuit (CC') connected to a control terminal (Tc), and a rectifier (P,D1,D2) connected to the power terminals of the switching element(s) (T,T1,T2) and adapted to be connected to the source serially with the load, the method providing for the switching element (T) or one of the switching elements (T1,T2) to make and break during each half-wave of the AC supply voltage respectively at first and second preset times, and being characterized in that the first or make preset time is selected, directly after the static switch (I. I') is connected to the source, i.e. on the appearance of the first half-wave of the voltage supply, with a first predetermined lag (t0) from the time when the voltage supply (V) being applied to the switch is substantially zero, and thereafter with the static switch (I,I') connected to the source (V,V'), with a second predetermined lag (t2) from the time when the current flowing through the static switch (I,I') is substantially zero, and in that the second or break preset time is selected to be substantially coincident with the time when the current flowing through the static switch is zero.

2. A device for controlling the power being supplied to a load (L,L') from an AC voltage source (V,V'), comprising:
a power static switch (I,I') having two terminals (3,4,3',4') adapted to be connected to the source (V,V') in series with the load (L,L'), and including at least one controllable one-way switching element (T,T1,T2) provided with two power terminals (Ta,Tb) and a control terminal (Tc), and a rectifier (P,D1,D2) connected to the power terminals (Ta,Tb) of the switching element (T) or elements (T1,T2) and the terminals (3,4,3',4') of the static switch (I,I'), and
a control circuit (C,C') connected to the control terminal (Tc) of the switching element (T) or elements (T1,T2) and adapted to cause the or one switching element to make and break during each half-wave of the AC voltage supply (V) at first and second preset times, respectively,
characterized in that it further comprises:
means connected to the static switch (I,I') and the control circuit (C,C') and effective to detect the voltage (VT,VT') across the power terminals (Ta,Tb) of the switching element (T) or elements (T1,T2), and
means (RSH,RSH1,RSH2) connected to the static switch (I,I') and the control circuit (C,C') to detect the current (IT,IT1,IT2) flowing through the switching element (T) or elements (T1,T2),
and that the control circuit (C,C') includes delay means effective to set the first or make preset time directly after the static switch (I,I') is connected to the source (V,V'), i.e. on the appearance of the first half-wave of the voltage supply, with a first predetermined lag (t0) from the time when the voltage (VT,VT') detected by the voltage detecting means is zero, and thereafter with the static switch (I,I') connected to the source (V,V'), with a second predetermined lag (t2) from the time when the current (IT,IT') detected by the current detecting means (RSH,RSH1,RSH2) is substantially zero, and effective to set the second or break preset time coincident with the time when the detected current is substantially zero.

3. A device according to Claim 2, characterized in that the static switch (I) comprises, as the switching element, a field-effect transistor whose source and drain terminals are the two power terminals (Ta,Tb) and whose gate terminal is the control terminal (Tc), and as the rectifier, a diode bridge rectifier (P), and in that the current detecting means comprise a resistor (RSH) in series with either of the transistor source (Ta) and drain (Tb) terminals.

4. A device according to Claim 2, characterized in that the static switch (I') comprises two switching elements consisting of field-effect transistors (T1,T2) push-pull connected across the two static switch (I') terminals (3',4'), and as the rectifier, two diodes (D1,D2), each connected in parallel to one of the transistors (T1,T2) in the opposite conduct direction from that of its respective transistor, and in that the current detecting means comprise two resistors (RSH1,RSH2), each connected in series to its respective transistor (T1,T2).

5. A device according to any of Claims 2 to 4, characterized in that the control circuit (C,C') includes means of driving the switching element (T) or elements (T1,T2) to make on the voltage (VT,VT') detected by said voltage detecting means reaching a selected maximum.

6. A device according to any of Claims 2 to 5, characterized in that the control circuit (C,C') includes means of driving the switching element (T) or elements (T1,T2) to break on the current (IT,IT') detected by said current detecting means (RSH,RSH1,RSH2) reaching a selected maximum.

7. A device according to any of Claims 2 to 6, characterized in that it comprises means associated with the switching element (T) or elements (T1,T2) effective to detect its temperature, and in that the control circuit (C,C') comprises means of driving the switching element (T) or elements (T1,T2) to break on the detected temperature reaching a selected maximum.

8. A device according to any of Claims 2, 3, 5, 6 and 7, characterized in that it comprises a supply circuit (A) for the control circuit (C) connected across the static switch (I) and the control circuit (C), including an auxiliary controllable one-way switching element (TA) connected across the recitifier (P) and a supply terminal of the control circuit (C), and having a control terminal, and that the control circuit (C) comprises means connected to said control terminal to generate a make signal (b) thereon substantially upon the voltage supply (VT) applied to the static switch (I) becoming substantially zero, directly after the static switch (I) is connected to the source (V), i.e. on the appearance of the first voltage supply half-wave, or upon the current (IT) flowing through the static switch (I) becoming substantially zero with the static switch (I) already connected to the source (V), and a break signal after a predetermined lag (t0) shorter than the minimum non-conduct time for the switching element (T).

9. A device according to Claim 8, characterized in that the supply circuit (A) includes positive resistance coefficient means (RP) thermally coupled to the switching element (T) and effective to inhibit operation of the supply circuit (A) upon the temperature of said element (T) reaching a selected maximum.

## Patentansprüche

1. Ein Verfahren zum durchgehenden Steuern der Leistung, die von einer Wechselspannungsquelle (V, V') zu einer elektrischen Last (L, L') geliefert wird, mittels eines statischen Leistungsschalters (I, I'), der mindestens ein steuerbares Einweg-Schaltungselement (T, T1, T2), das mit zwei Leistungsanschlüssen (Ta, Tb) versehen ist, eine Steuerungsschaltung (C, C'), die mit einem Steuerungsanschluß (Tc) verbunden ist, und einen Gleichrichter (P, D1, D2) aufweist, welcher mit den Leistungsanschlüssen des Schaltungselements (T) oder der Schaltungselemente (T1, T2) verbunden und angepaßt ist, um seriell zur Last mit der Quelle verbunden zu werden, wobei das Verfahren dafür sorgt, daß sich das Schaltungselement (T) oder eines der Schaltungselemente (T1, T2) während jeder Halbwelle der Wechselversorgungsspannung bei einer voreingestellten ersten und einer voreingestellten zweiten Zeit schließt bzw. öffnet,
dadurch gekennzeichnet ist, daß
direkt nachdem der statische Schalter (I, I') mit der Quelle verbunden ist, d.h. beim Auftreten der ersten Halbwelle der Versorgungsspannung, die voreingestellte erste oder Schließzeit mit einer vorbestimmten Verzögerung (t0) von dem Zeitpunkt aus, zu dem die an den Schalter angelegte Spannungsversorgung (V) im wesentlichen Null ist, gewählt wird, und danach, bei mit der Quelle (V, V') verbundenem statischen Schalter (I, I'), mit einer zweiten vorbestimmten Verzögerung (t2) von dem Zeitpunkt aus, zu dem der durch den statischen Schalter (I, I') fließende Strom im wesentlichen Null ist, gewählt wird, und
die voreingestellte zweite oder Öffnungszeit gewählt wird, damit sie im wesentlichen mit dem Zeitpunkt zusammenfällt, zu dem der Strom Null ist, der durch den statischen Schalter fließt.

2. Ein Gerät zum Steuern der Leistung, die von einer Wechselspannungsquelle (V, V') zu einer Last (L, L') geliefert wird, mit folgenden Merkmalen:
einem statischen Leistungsschalter (I, I') mit zwei Anschlüssen (3, 4, 3', 4'), der angepaßt ist, um seriell zu der Last (L, L') mit der Quelle (V, V') verbunden zu werden, wobei derselbe mindestens ein steuerbares Einweg-Schaltungselement (T, T1, T2), das mit zwei Leistungsanschlüssen (Ta, Tb) und einem Steuerungsanschluß (Tc) versehen ist, und einen Gleichrichter (P, D1, D2) aufweist, der mit den Leistungsanschlüssen (Ta, Tb) des Schaltungselements (T) oder der -Elemente (T1, T2) und den Anschlüssen (3, 4, 3', 4') des statischen Schalters (I, I') verbunden ist, und
einer Steuerungsschaltung (C, C'), die mit dem Steuerungsanschluß (Tc) des Schaltungselements (T) oder der -Elemente (T1, T2) verbunden und angepaßt ist, um zu bewirken, daß sich das Schaltungselement oder ein Schaltungselement zu einem voreingestellten ersten bzw. zweiten Zeitpunkt während jeder Halbwelle der Wechselspannungsversorgung (V) schließt bzw. schließen oder öffnet bzw. öffnen,
gekennzeichnet durch folgende Merkmale:
eine Einrichtung, die mit dem statischen Schlter (I, I') und der Steuerungsschaltung (C, C') verbunden und wirksam ist, um die Spannung (VT, VT') über die Leistungsanschlüsse (Ta, Tb) des Schaltungselementes (T) oder der -Elemente (T1, T2) zu erfassen, und
eine Einrichtung (RSH, RSH1, RSH2), die mit dem statischen Schalter (I, I') und der Steuerungsschaltung (C, C') verbunden ist, um den Strom (IT, IT1, IT2), der durch das Schaltungselement (T) oder die -Elemente (T1, T2) fließt, zu erfassen,
und daß die Steuerungsschaltung (C, C') eine Verzögerungseinrichtung aufweist, die wirksam ist, um die voreingestellte erste oder Schließzeit direkt nachdem der statische Schalter (I, I') mit der Quelle (V, V') verbunden ist, d.h. beim Auftreten der ersten Halbwelle der Versorgungsspannung mit einer ersten vorbestimmten Verzögerung (t0) von dem Zeitpunkt aus, zu dem die von der Spannungseinrichtung erfaßte Spannung (VT, VT') Null ist, und danach, bei mit der Quelle (V, V') verbundenem Schalter (I, I'), mit einer vorbestimmten Verzögerung (t2) von dem Zeitpunkt aus, zu dem der durch die Stromerfassungseinrichtung (RSH, RSH1, RSH2) erfaßte Strom (IT, IT') im wesentlichen Null ist, einzustellen, und die wirksam ist, um die voreingestellte zweite oder Öffnungszeit einzustellen, damit sie mit dem Zeitpunkt zusammenfällt, zu dem der erfaßte Strom im wesentlichen Null ist.

3. Ein Gerät gemäß Anspruch 2, dadurch gekennzeichnet, daß
der statische Schalter (I) als das Schaltungselement einen Feldeffekttransistor, dessen Source- und Drain-Anschlüsse die beiden Leistungsanschlüsse (Ta, Tb) sind, und dessen Gateanschluß der Steuerungsanschluß (Tc) ist, und als den Gleichrichter einen Diodenbrückengleichrichter (P) aufweist, und
die Stromerfassungseinrichtung einen Widerstand (RSH) aufweist, der seriell zu entweder dem Source-Anschluß (Ta) oder dem Drain-Anschluß (Tb) des Transistors geschaltet ist.

4. Ein Gerät gemäß Anspruch 2, dadurch gekennzeichnet, daß
der statische Schalter (I') zwei Schaltungselemente, die aus Feldeffekttransistoren (T1, T2) bestehen, die zwischen die zwei Anschlüsse (3', 4') des statischen Schalters (I') gegentaktmäßig geschaltet sind, und als den Gleichrichter zwei Dioden (D1, D2) aufweist, wobei jede Diode parallel zu einem der Transistoren (T1, T2) in der Leitungsrichtung, die der Leitungsrichtung des jeweiligen Transistors der Diode entgegengesetzt ist, geschaltet ist, und
die Stromerfassungseinrichtung zwei Widerstände (RSH1, RSH2) aufweist, wobei jeder mit seinem jeweiligen Transistor (T1, T2) verbunden ist.

5. Ein Gerät gemäß einem beliebigen der Ansprüche 2 bis 4, dadurch gekennzeichnet,
daß die Steuerungsschaltung (C, C') eine Einrichtung zum Treiben des Schaltungselements (T) oder der -Elemente (T1, T2) aufweist, damit sich dasselbe bzw. dieselben schließt bzw. schließen, wenn die Spannung (VT, VT'), die von der Spannungserfassungseinrichtung erfaßt wird, ein ausgewähltes Maximum erreicht.

6. Ein Gerät gemäß einem beliebigen der Ansprüche 2 bis 5, dadurch gekennzeichnet,
daß die Steuerungsschaltung (C, C') eine Einrichtung zum Treiben des Schaltungselementes (T) oder der -Elemente (T1, T2) aufweist, damit sich dasselbe bzw. dieselben öffnet bzw. öffnen, wenn der Strom (IT, IT'), der von der Stromerfassungseinrichtung (RSH, RSH1, RSH2) erfaßt wird, ein ausgewähltes Maximum erreicht.

7. Ein Gerät gemäß einem beliebigen der Ansprüche 2 bis 6, dadurch gekennzeichnet, daß
dasselbe eine Einrichtung aufweist, die dem Schaltungselement (T) oder den -Elementen (T1, T2) zugeordnet ist, um wirksam die Temperatur desselben bzw. derselben zu erfassen, und
die Steuerungsschaltung (C, C') eine Einrichtung zum Treiben des Schaltungselements (T) oder der -Elemente (T1, T2) aufweist, damit sich dasselbe bzw. dieselben öffnet bzw. öffnen, wenn die erfaßte Temperatur ein ausgewähltes Maximum erreicht.

8. Ein Gerät gemäß einem beliebigen der Ansprüche 2, 3, 5, 6 und 7, dadurch gekennzeichnet, daß
dasselbe eine Versorgungsschaltung (A) für die Steuerungsschaltung (C) aufweist, die zwischen den statischen Schalter (I) und die Steuerungsschaltung (C) geschaltet ist, wobei die Versorgungsschaltung (A) ein steuerbares Einweg-Hilfsschaltungselmente (TA) aufweist, das zwischen den Gleichrichter (P) und einen Versorgungsanschluß der Steuerungsschaltung (C) geschaltet ist, und einen Steuerungsanschluß aufweist, und
die Steuerungsschaltung (C) eine Einrichtung aufweist, die mit dem Steuerungsanschluß verbunden ist, um ein Schließsignal (b) auf demselben im wesentlichen dann zu erzeugen, wenn die Versorgungsspannung (VT), die an den statischen Schalter (I) angelegt ist, im wesentlichen Null wird, direkt nachdem der statische Schalter (I) mit der Quelle (V) verbunden worden ist, d.h. beim Aufteten der ersten Spannungsversorgungs-Halbwelle, oder dann wenn der Storm (IT), der durch den statischen Schalter (I), der bereits mit der Quelle (V) verbunden ist, fließt, im wesentlichen Null wird, und um ein Öffnungssignal nach einer vorbestimmten Verzögerung (t0) zu erzeugen, die kürzer als die minimale Nicht-Leitungszeit für das Schaltungselement (T) ist.

9. Ein Gerät gemäß Anspruch 8, dadurch gekennzeichnet, daß
die Versorgungssschaltung (A) eine Einrichtung mit positivem Widerstandkoeffizienten (RP) aufweist, die mit dem Schaltungselement (T) thermisch gekoppelt und wirksam ist, um den Betrieb der Versorgungsschaltung (A) zu verhindern, wenn die Temperatur des Elementes (T) ein ausgewähltes Maximum erreicht.

## Revendications

1. Procédé pour commander en continu la puissance fournie à une charge électrique (L, L') à partir d'une source (V, V') de tension alternative, au moyen d'un commutateur statique (I, I') de puissance comportant au moins un élément de commutation unidirectionnelle (T, T1, T2) pouvant être commandé et pourvu de deux bornes de puissance (Ta, Tb) et un circuit de commande (C, C') connecté à une borne de commande (Tc), et un redresseur (P, D1, D2) connecté aux bornes de puissance de l'élément ou des éléments de commutation (T, T1, T2) et destiné à être connecté à la source en série avec la charge, le procédé comprenant la fermeture et l'ouverture de l'élément de commutation (T) ou de l'un des éléments de commutation (T1, T2) pendant chaque alternance de la tension alternative d'alimentation respectivement à des premier et second temps préétablis, et étant caractérisé en ce que le premier temps ou temps préétabli de fermeture est sélectionné directement après que le commutateur statique (I, I') a été connecté à la source, c'est-à-dire lors de l'apparition de la première alternance de l'alimentation en tension, avec un premier retard prédéterminé (t0) à partir du temps auquel l'alimentation en tension (V) appliquée au commutateur est sensiblement nulle, et ensuite avec le commutateur statique (I, I') connecté à la source (V, V'), avec un second retard prédéterminé (t2) à partir du temps auquel le courant circulant dans le commutateur statique (I, I') est sensiblement nul, et en ce que le second temps ou temps préétabli d'ouverture est sélectionné de façon à coïncider sensiblement avec le temps où le courant circulant dans le commutateur statique est nul.

2. Dispositif pour commander la puissance fournie à une charge (L, L') à partir d'une source de tension alternative (V, V'), comportant :
un commutateur statique (I, I') de puissance ayant deux bornes (3, 4, 3', 4') destinées à être connectées à la source (V, V') en série avec la charge (L, L'), et comprenant au moins un élément de commutation unidirectionnel (T, T1, T2) pouvant être commandé, pourvu de deux bornes de puissance (Ta, Tb) et d'une borne de commande (Tc), et un redresseur (P, D1, D2) connecté aux bornes de puissance (Ta, Tb) de l'élément de commutation (T) ou des éléments de commutation (T1, T2), et aux bornes (3, 4, 3', 4') du commutateur statique (I, I'), et
un circuit de commande (C, C') connecté à la borne de commande (Tc) de l'élément de commutation (T) ou des éléments de commutation (T1, T2) et destiné à amener le ou un élément de commutation à se fermer et s'ouvrir pendant chaque alternance de l'alimentation en tension alternative (V) à des premier et second temps préétablis, respectivement,
caractérisé en ce qu'il comporte en outre :
des moyens connectés au commutateur statique (I, I') et au circuit de commande (C, C') et ayant pour effet de détecter la tension (VT, VT') entre les bornes de puissance (Ta, Tb) de l'élément de commutation (T) ou des éléments de commutation (T1, T2), et
des moyens (RSH, RSH1, RSH2) connectés au commutateur statique (I, I') et au circuit de commande (C, C') pour détecter le courant (IT, IT1, IT2) circulant dans l'élément (T) ou les éléments (T1, T2) de commutation,
et en ce que le circuit de commande (C, C') comprend un moyen à retard ayant pour effet d'établir le premier temps ou temps préétabli de fermeture directement après que le commutateur statique (I, I') a été connecté à la source (V, V'), c'est-à-dire lors de l'apparition de la première alternance de l'alimentation en tension, avec un premier retard prédéterminé (t0) à partir du temps où la tension (VT, VT') détectée par le moyen de détection de tension est nulle, et ensuite avec le commutateur statique (I, I') connecté à la source (V, V'), avec un second retard prédéterminé (t2) à partir du temps où le courant (IT, IT') détecté par les moyens (RSH, RSH1, RSH2) de détection de courant est sensiblement nul, et ayant pour effet d'établir le second temps ou temps préétabli d'ouverture en coïncidence avec le temps où le courant détecté est sensiblement nul.

3. Dispositif selon la revendication 2, caractérisé en ce que le commutateur statique (I) comporte, en tant qu'élément de commutation, un transistor à effet de champ dont les bornes de source et de drain sont les deux bornes de puissance (Ta, Tb), et dont la borne de grille est la borne de commande (Tc), et, en tant que redresseur, un redresseur (P) à pont de diodes, et en ce que les moyens de détection de courant comprennent une résistance (RSH) en série avec chacune des bornes (Ta) de source et (Tb) de drain du transistor.

4. Dispositif selon la revendication 2, caractérisé en ce que le commutateur statique (I') comporte deux éléments de commutation constitués de transistors (T1, T2) à effet de champ connectés en montage symétrique aux deux bornes (3', 4') du commutateur statique (T'), et, en tant que redresseur, deux diodes (D1, D2) connectées chacune en parallèle avec l'un des transistors (T1, T2), dans le sens de conduction opposé à celui de son transistor respectif, et en ce que des moyens de détection de courant comprennent deux résistances (RSH1, RSH2) connectées chacune en série avec son transistor respectif (T1, T2).

5. Dispositif selon l'une quelconque des revendications 2 à 4, caractérisé en ce que le circuit de commande (C, C') comprend des moyens d'attaque de l'élément (T) ou des éléments (T1, T2) de commutation pour le fermer ou les fermer lorsque la tension (VT, VT') détectée par lesdits moyens de détection de tension atteint un maximum sélectionné.

6. Dispositif selon l'une quelconque des revendications 2 à 5, caractérisé en ce que le circuit de commande (C, C') comprend des moyens d'attaque de l'élément (T) ou des éléments (T1, T2) de commutation pour ouvrir l'élément ou les éléments lorsque le courant (IT, IT') détecté par lesdits moyens de détection de courant (RSH, RSH1, RSH2) atteint un maximum sélectionné.

7. Dispositif selon l'une quelconque des revendications 2 à 6, caractérisé en ce qu'il comporte des moyens associés à l'élément (T) ou aux éléments (T1, T2) de commutation et ayant pour effet de détecter sa ou leur température, et en ce que le circuit de commande (C, C') comporte des moyens d'attaque de l'élément (T) ou des éléments (T1, T2) de commutation pour ouvrir cet élément ou ces éléments lorsque la température détectée atteint un maximum sélectionné.

8. Dispositif selon l'une quelconque des revendications 2, 3, 5, 6 et 7, caractérisé en ce qu'il comporte un circuit (A) d'alimentation pour le circuit de commande (C) connecté aux bornes du commutateur statique (I) et du circuit de commande (C), comprenant un élément de commutation unidirectionnel auxiliaire (TA), pouvant être commandé et connecté aux bornes du redresseur (P) et à une borne d'alimentation du circuit de commande (C), et ayant une borne de commande, et en ce que le circuit de commande (C) comporte des moyens connectés à ladite borne de commande pour générer sur celle-ci un signal de fermeture (b) sensiblement au moment où l'alimentation en tension (VT) appliquée au commutateur statique (I) devient sensiblement égale à zéro, directement après la connexion du commutateur statique (I) à la source (V), c'est-à-dire lors de l'apparition de la première alternance d'alimentation en tension, ou lorsque le courant (IT) circulant dans le commutateur statique (I) devient sensiblement égal à zéro, le commutateur statique (I) étant déjà connecté à la source (V), et un signal d'ouverture après un retard prédéterminé (t0) plus court que le temps minimal de non-conduction pour l'élément de commutation (T).

9. Dispositif selon la revendication 8, caractérisé en ce que le circuit d'alimentation (A) comprend un moyen (RP) à coefficient positif de résistance, couplé thermiquement à l'élément (T) de commutation et ayant pour effet d'empêcher le fonctionnement du circuit (A) d'alimentation lorsque la température dudit élément (T) atteint un maximum sélectionné.
